(19)

Europäisches Patentamt

European Patent Office

Office européen des brevets

(11) **EP 4 102 415 A1**

(12) **EUROPEAN PATENT APPLICATION**

(43) Date of publication:
**14.12.2022 Bulletin 2022/50**

(51) International Patent Classification (IPC):
**G06N 5/02** *(2006.01)*

(21) Application number: **22171569.1**

(52) Cooperative Patent Classification (CPC):
**G06N 5/025; G06N 5/022**

(22) Date of filing: **04.05.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.06.2021 JP 2021097159**

(71) Applicant: **FUJITSU LIMITED**
**Kawasaki-shi, Kanagawa 211-8588 (JP)**

(72) Inventor: **Murakami, Katsuhiko**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **ASSOCIATION RULE GENERATION PROGRAM, DEVICE, AND METHOD**

(57) An association rule generation device includes a processor that executes a procedure. The procedure includes acquiring plural combinatorial data including one or more data value, for each of the combinatorial data augmenting the combinatorial data with a high level concept data value for each of the one or more data values contained in the combinatorial data, and generating an association rule indicating an association between data values by employing the plural combinatorial data augmented with the high level concept data values.

FIG. 7

START

ACQUIRE TRANSACTION DATA SET AND ONTOLOGY ~ S10

ADD HIGH LEVEL CONCEPT ITEM FOR EACH ITEM TO TRANSACTION DATA SET ~ S20

k-ITEM EXTRACTION PROCESSING ~ S30

GENERATE ASSOCIATION RULE, COMPUTE CONFIDENCE LEVEL, AND OUTPUT ASSOCIATION RULES WITH CONFIDENCE LEVEL OF THRESHOLD VALUE OR GREATER ~ S50

END

EP 4 102 415 A1

## Description

FIELD

The embodiments discussed herein are related to an association rule generation program, an association rule generation device, and an association rule generation method.

BACKGROUND

The generation of association rules has hitherto been performed from acquired data. An association rule expresses a relationship of a specific event Y occurring given a specific event X, and is often denoted by use of an arrow as [X → Y]. The X part on the left of the arrow is called an antecedent (also called a precondition), and the Y part is called a consequent (also called a conclusion). For example, consider a convenience store in which person A has bought (bread, milk, jam) and person B has bought (rice balls, green tea, pickles). In cases in which there are many occasions of people purchasing products in the same combinations as these two people, then this enables the association rules of "someone who buys bread also buys milk and jam", "someone who buys bread and milk also buys jam", and "someone who buys rice balls and green tea also buys pickles" to be extracted therefrom.

There is technology that, with the objective of raising the interpretability of generated association rules and the like, generates association rules using items that are high level conceptualizations of instances contained in acquired data. The instances here are data values originally contained in the acquired data, such as the products in the above example of a convenience store. There is, for example, a proposal for a system that references an ontology indicating relationships between instances and high level concept items of these instances in order to apply filtering to the instances employed in association rules. In such a system, the instances contained in the acquired data are transformed into high level concept items, and then all the items belonging to a specified hierarchical layer in the ontology are employed to extract an itemset for use in generating an association rule using an *a priori* algorithm.

*[Related Non-Patent Documents]*

Andrea Bellandi, Barbara Furletti, Valerio Grossi, and Andrea Romei, "Ontology-Driven Association Rule Extraction: A Case Study", Conference: Proceedings of the International Workshop on Contexts and Ontologies: Representation and Reasoning (C&O:RR) Collocated with the 6th International and Interdisciplinary Conference on Modelling and Using Context (CONTEXT-2007), Roskilde, Denmark, August 21st, 2007.

However, there is an issue with related technology in that association rules are not able to be generated using itemsets spanning different hierarchical layers of an ontology. An association rule might be generated using an item contained in the acquired data, and the generated association rule might conceivably be transformed into high level concepts obtained using an ontology as in the related technology. However, such cases have an issue in that a high level conceptualization of an association rule is not able to be generated for an itemset that is not extractable as an itemset for generating an association rule from a low level concept.

SUMMARY

An object of an aspect of the present disclosure is to generate an association rule that has also appropriately incorporated a high level concept.

According to an aspect of the embodiments, an association rule generation program causes a computer to execute processing including: acquiring plural combinatorial data including one or more data value; for each of the combinatorial data, augmenting the combinatorial data with a high level concept data value for each of the one or more data values contained in the combinatorial data; and generating an association rule indicating an association between data values by employing the plural combinatorial data augmented with the high level concept data values.

BRIEF DESCRIPTION OF DRAWINGS

Fig. 1 is a functional block diagram of an association rule generation device.
Fig. 2 is a diagram illustrating an example of a transaction data set.
Fig. 3 is a diagram illustrating an example of an ontology.
Fig. 4 is a diagram illustrating an example of an augmented transaction data set.
Fig. 5 is a diagram illustrating an example of an exclusion list.
Fig. 6 is a block diagram illustrating a schematic configuration of a computer functioning as an association rule generation device.
Fig. 7 is a flowchart illustrating an example of association rule generation processing.
Fig. 8 is flowchart illustrating an example of k-item extraction processing.
Fig. 9 is a diagram to explain an advantageous effect of an association rule generation device according to the present exemplary embodiment.
Fig. 10 is a diagram illustrating an example of ontology relating to medical data.

DESCRIPTION OF EMBODIMENTS

Explanation follows regarding an example of an exemplary embodiment according to technology disclosed herein, with reference to the drawings.

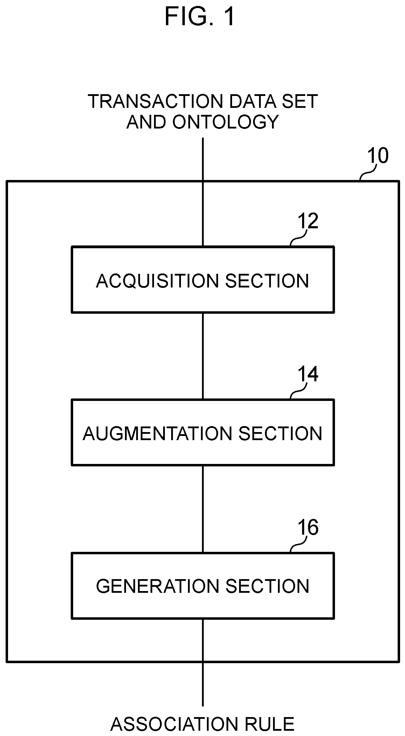

As illustrated in Fig. 1, an association rule generation device 10 is input with a transaction data set and an ontology. The association rule generation device 10 uses the input transaction data set and ontology to generate and output an association rule.

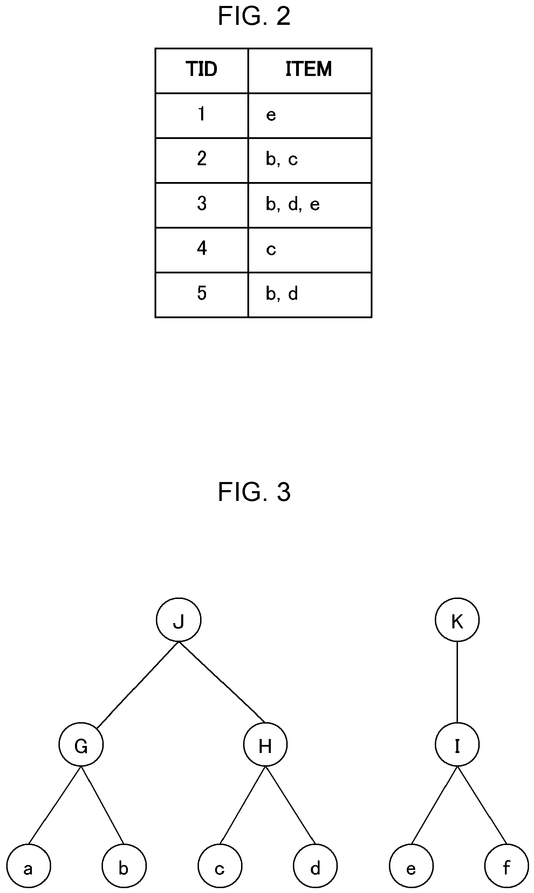

The transaction data set is a set of transaction data including one or more item. Fig. 2 illustrates an example of a transaction data set. The example of Fig. 2 is a representation of plural transaction data contained in the transaction data set, expressed in a table format in which each row (each record) corresponds to a single transaction data. Each of the transaction data is data in which an ID number of transaction data "TID" is associated with an "item" contained in the transaction data.

An item is an entity contained in the transaction data. For example, in cases in which the transaction data is a receipt relating to a single transaction bill, such as in a convenience store or the like, then each of the purchased products listed on the receipt is an item. Moreover, for example, in cases in which the transaction data is a result of a genetic test on a single patient, then each of the types of mutation contained in the test result is an item. Note that transaction data is an example of combinatorial data of technology disclosed herein, and an item is an example of a data value of technology disclosed herein.

An ontology is data expressing high level concept-low level concept relationships in relation to items. For example, the ontology may be a knowledge graph in which items are represented by nodes, and edges connecting between the nodes correspond to inter-item hierarchical relationships such as an IS-A relationship, a part-of relationship, etc. Fig. 3 illustrates an example of an ontology. In the example of Fig. 3, each of the nodes is represented by a circle, and the symbol inside the circle represents an item corresponding to that node. In the following a node corresponding to item "X" will be denoted by "node X". Moreover, each of the lowest layer nodes, namely leaf nodes, corresponds to each of the items contained in the transaction data obtained. Each node in a high level hierarchical layer corresponds to an item that is a high level concept of an item corresponding to a low level node to which it is connected.

For example, in a case directed toward transaction data for purchased products as described above, for example, a node a is an item "apple", a node b is an item "banana", a node G is an item "fruit", and a node J is an item "food", etc. Moreover, for example, in a case directed toward genome data (medical data), nodes a to f are genetic mutations, nodes G, H, and I are each a gene name, and nodes J and K are each a gene family, etc. Note that the example in Fig. 3 illustrates an example of a three hierarchical layer ontology, however, the number of hierarchical layers in the hierarchical ontology may be two hierarchical layers or four or more hierarchical layers.

The association rule generation device 10 functionally includes an acquisition section 12, an augmentation section 14, and a generation section 16, as illustrated in Fig. 1.

The acquisition section 12 acquires the transaction data set and the ontology that were input to the association rule generation device 10, and passes these across to the augmentation section 14.

For each of the transaction data contained in the transaction data set passed from the acquisition section 12, the augmentation section 14 augments the transaction data with items that are high level concepts for each of the items contained in the transaction data. Specifically, the augmentation section 14 references the ontology passed from the acquisition section 12, identifies items that are high level concepts for each of the items, and adds the identified items to the corresponding transaction data. In cases in which the ontology is configured with three hierarchical layers or more, the augmentation section 14 sequentially tracks from the lowest layer nodes, which correspond to the items contained in the original transaction data, to the high level layer nodes connected by edges thereto, and identifies high level concept items from the nodes in each of the layers up to the highest layer.

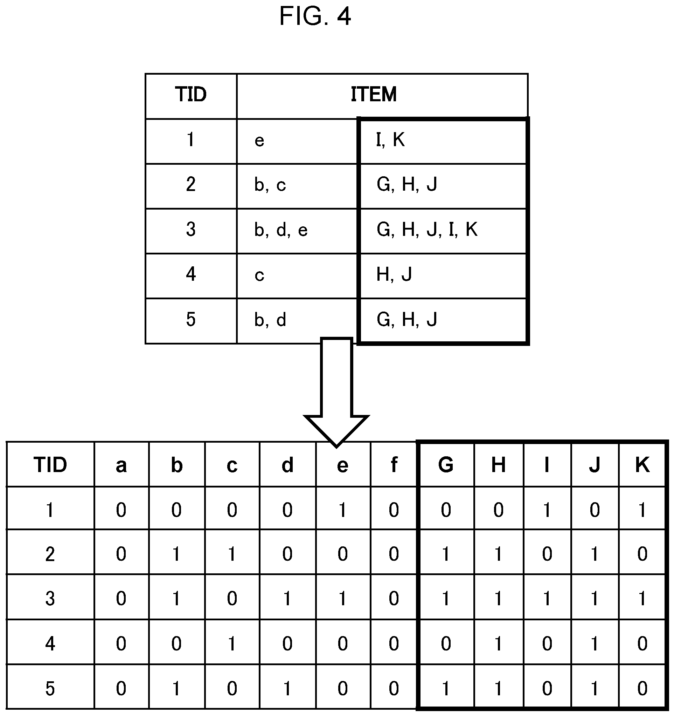

For example, in cases in which TID = 2 as illustrated in Fig. 2, b and c are contained as items in the transaction data. With reference to the ontology illustrated in Fig. 3, because node G and node J are nodes in high level layers connected to node b, G and J are high level concept items of item b. Similarly, H and J are high level concept items of item c. The augmentation section 14 accordingly adds items G, H, and J to the transaction data of TID = 2. The top of Fig. 4 illustrates an example in which high level concept items have been added to the transaction data illustrated in Fig. 2 with reference to the ontology illustrated in Fig. 3. In Fig. 4 the portion illustrated with a bold frame illustrates the augmented high level concept items.

In order to facilitated subsequent processing, the augmentation section 14 may convert the transaction data set augmented with the high level concept items into a table expressed by one-hot for each of the items, as illustrated at the bottom of Fig. 4. The augmentation section 14 passes the transaction data set augmented with the high level concept items (hereafter referred to as the "augmented transaction data set") and the ontology to the generation section 16.

The generation section 16 uses the augmented transaction data set passed from the augmentation section 14 to generate association rules indicating associations between items.

Specifically, the generation section 16 extracts an itemset satisfying a prescribed condition from out of itemsets combining two or more items from the items contained in the augmented transaction data set. The generation section 16 may extract the itemset satisfying the prescribed condition using an apriori algorithm. A detailed explanation is given later regarding the extraction of an itemset using an apriori algorithm. The prescribed condition may be that an index related to appearance frequency of an itemset in the augmented transaction data set is a threshold value or greater. For example, the generation section 16 may apply a support number indicating the number of transaction data in which a given itemset appears in the augmented transaction data set as the index, and extract itemsets for which the support number is a prescribed threshold value or greater.

The generation section 16 generates an association rule to express an antecedent represented by a combination of some items contained in the extracted itemset, and a consequent represented by a combination of remaining items. For example, in cases in which {b, H} is extracted as an itemset, the generation section 16 generates from this itemset the association rules of [b → H] and [H → b]. Moreover, for example, in cases in which {b, G, H} is extracted as an itemset, the generation section 16 generates from this itemset the association rules of [b → (G, H)], [G → (b, H)], [H → (b, G)], [(G, H) → b], [(b, H) → G], and [(b, G) → H].

High level concept items of the original item are added to the augmented transaction data set. This enables association rules that employ items expressed as high level concepts to be generated by generating association rules from itemsets combining items contained in the augmented transaction data set. This raises the interpretability and generality of the association rules generated thereby. Namely, association rules are generated having good predictability and a higher general validity.

However, in cases in which association rules are simply generated from itemsets combining items contained in the augmented transaction data set, association rules expressing known hierarchical relationships between items are also generated, such as [b → G] and [b → J]. Moreover, association rules for inclusion relationships such as [(J, H) → f] [H → f] are both generated, although generating only one thereof would be sufficient. Preferably relationships between items that up to now would not have been noticed are discovered based on the association rules, and, in cases in which they are to be used in subsequent investigations, preferably redundant association rules such as the association rules described above are not generated as association rules.

In order to address this the generation section 16 adds the above prescribed condition, i.e. that the extracted itemset does not include combinations of items having a high level concept-low level concept relationship. Specifically, based on the ontology, the generation section 16 produces an exclusion list of combinations of items that have a high level concept-low level concept relationship. The generation section 16 then excludes from the extracted itemsets any itemsets for a combination present in the exclusion list from out of the itemsets combining items included in the augmented transaction data set.

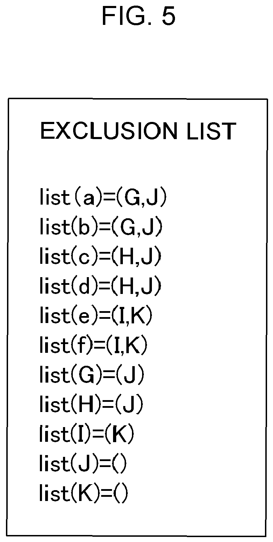

For example, for each item the generation section 16 sequentially tracks from nodes corresponding to each item in the ontology through high level layer nodes connected by edges thereto, and produces an exclusion list listing respective pairs of high level concept items identified from the nodes in each of the layers up to the highest layer. Fig. 5 illustrates an example of an exclusion list. In the example illustrated in Fig. 5, for example "list(a) = (G,J)" means that an itemset containing a combination of items a and G is excluded, and an itemset containing a combination of items a and J is excluded.

Thus for the itemsets {b, G } and {b, J}, association rules expressing known hierarchical relationships between items, such as [b → G] and [b → J] mentioned above, are not generated due to being excluded based on "list(b) = (G,J)" in the exclusion list. Moreover, for the itemset {f, J, H}, an association rule such as [(J, H) → f] is not generated due to being excluded based on "list(H) = (J)" in the exclusion list. However, for the itemset {f, H}, an association rule such as [H → f] is generated due to not performing exclusion based on the exclusion list. Thus the association rule [H → f] is generated alone from out of the inclusion relationships [(J, H) → f] and [H → f].

Moreover, the generation section 16 may output, as the final generated association rules, any association rule, from among the generated association rules, for which the prescribed index is a threshold value or greater. The index may, for example, be a support level of supp (X → Y), or a confidence level of conf (X → Y), or a lift of lift (X → Y), or a combination thereof. Note that X is an antecedent of the association rule in the itemset, and Y is a consequent of the association rule in the itemset.

$$\text{supp}(X{\rightarrow}Y) \qquad = \sigma(X{\cup}Y)/M$$

$$\text{conf}(X{\rightarrow}Y) \qquad = \sigma(X{\cup}Y)/\sigma(X)$$
$$= \text{supp}(X{\rightarrow}Y)/\text{supp}(X)$$

$$\text{lift}(X{\rightarrow}Y) \qquad = \text{conf}(X{\rightarrow}Y)/\text{supp}(Y)$$

In the above equations, M is the number of transaction data contained in the augmented transaction data set, $\sigma(X{\cup}Y)$ is the number of transaction data included in itemsets X and Y, and $\sigma(X)$ is the number of transaction data included in itemset X.

For example, for the prescribed condition employed when extracting itemsets as described above, itemsets having a support number of a threshold value or greater are extracted, and from among association rules generated from the extracted itemsets, association rules having a confidence level of a threshold value or greater are output. This results in an association rule satisfying a minimum support level (a threshold value support level) and a minimum confidence level (a threshold value confidence level) being output in this case.

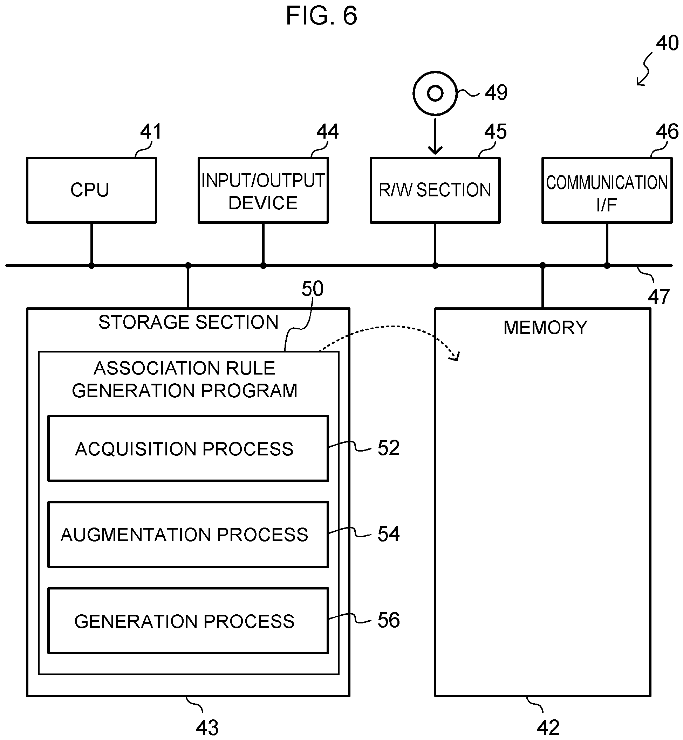

The association rule generation device 10 may, for example, be implemented by a computer 40 as illustrated in Fig. 6. The computer 40 includes a central processing unit (CPU) 41, memory 42 serving as a temporary storage area, and a non-volatile storage section 43. The computer 40 also includes an input/output device 44 such as an input section, display section, or the like, and a read/write (R/W) section 45 for controlling reading and writing of data from/to a storage medium 49. The computer 40 also includes a communication interface (I/F) 46 connected to a network such as the internet. The CPU 41, the memory 42, the storage section 43, the input/output device 44, the R/W section 45, and the communication I/F 46 are connected to each other through a bus 47.

The storage section 43 may be implemented by a hard disk drive (HDD), a solid state drive (SSD), flash memory, or the like. An association rule generation program 50 to cause the computer 40 to function as the association rule generation device 10 is stored in the storage section 43 serving as a storage medium. The association rule generation program 50 includes an acquisition process 52, an augmentation process 54, and a generation process 56.

The CPU 41 reads the association rule generation program 50 from the storage section 43, expands the association rule generation program 50 into the memory 42, and sequentially executes the processes of the association rule generation program 50. The CPU 41 operates as the acquisition section 12 illustrated in Fig. 1 by executing the acquisition process 52. The CPU 41 operates as the augmentation section 14 illustrated in Fig. 1 by executing the augmentation process 54. The CPU 41 operates as the generation section 16 illustrated in Fig. 1 by executing the generation process 56. The computer 40 executing the association rule generation program 50 accordingly functions as the association rule generation device 10. Note that the CPU 41 executing the program is hardware.

Note that the functions implemented by the association rule generation program 50 may also be implemented, for example, by a semiconductor integrated circuit, or more specifically by an application specific integrated circuit (ASIC).

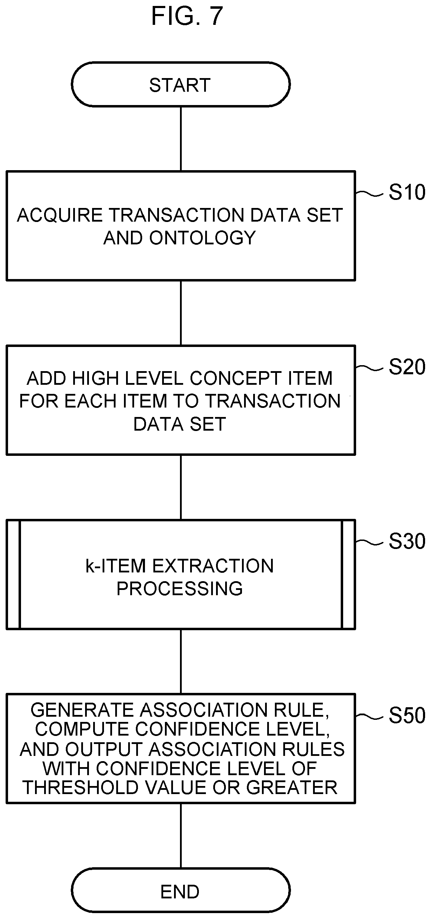

Next, description follows regarding operation of the association rule generation device 10 according to the present exemplary embodiment. A transaction data set and an ontology are input to the association rule generation device 10, and then, when instructed to generate an association rule, the association rule generation device 10 executes the association rule generation processing illustrated in Fig. 7. Note that association rule generation processing is an example of an association rule generation method of technology disclosed herein.

At step S10, the acquisition section 12 acquires the transaction data set and the ontology input to the association rule generation device 10, and passes them to the augmentation section 14. Consider here a case in which the transaction data set illustrated in Fig. 2 and the ontology illustrated in Fig. 3 have been acquired.

Next, at step S20, the augmentation section 14 references the ontology passed from the acquisition section 12, identifies high level concept items for each of the items contained in the transaction data, and adds these identified items to the corresponding transaction data. An augmented transaction data set such as illustrated in Fig. 4 is accordingly obtained. The augmentation section 14 passes the augmented transaction data set and the ontology to the generation section 16.

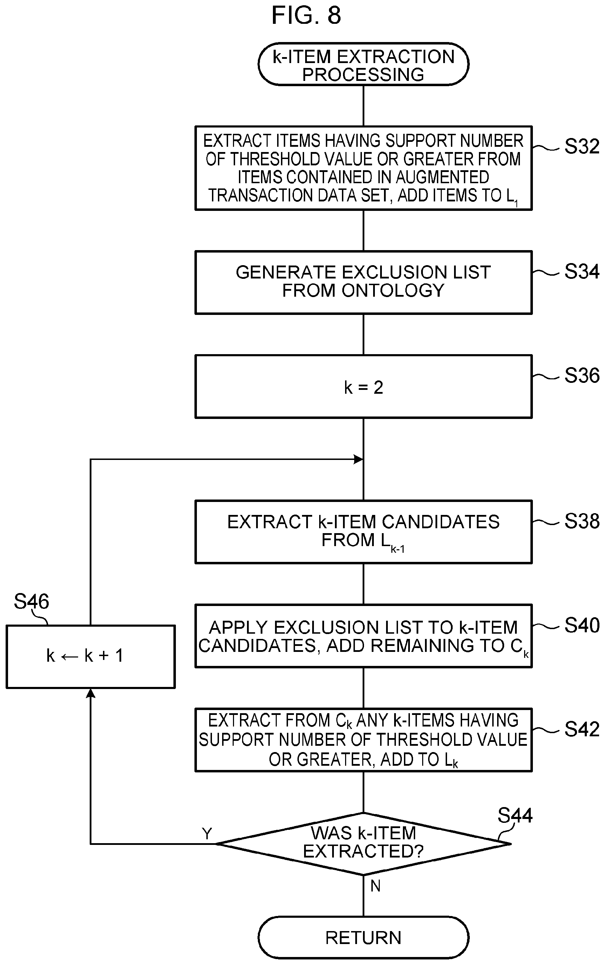

Next, at step S30, k-item extraction processing is executed. A k-item is an itemset combining k individual items from out of the items contained in the augmented transaction data set. The k-item extraction processing will be described in detail later, with reference to Fig. 8. Note that the k-item extraction processing is processing in which an apriori algorithm as mentioned above is applied.

At step S32, the generation section 16 extracts items for which the support number is the threshold value or greater from the items contained in the augmented transaction data set passed from the augmentation section 14, and adds these to set $L_1$. If the support number threshold value is 3, then $L_1 = \{b, G, H, J\}$.

Next, at step S34, the generation section 16 produces an exclusion list such as illustrated in Fig. 5 based on the ontology passed from the augmentation section 14. Next, at step S36, the generation section 16 sets k to 2.

Next, at step S38, the generation section 16 extracts candidates for a k-item from the (k-1)-items contained in the set $L_{k-1}$. Note that any (k-1)-item not contained in $L_{k-1}$ has a support number less than the threshold value, and so the support number of a k-item including such a (k-1)-item would also necessarily be less than the threshold value. This means that the processing of the present step may simply be performed on the (k-1)-items contained in the set $L_{k-1}$. (b, G), (b, H), (b, J), (G, H), (G, J), and (H, J) are accordingly extracted here as 2-item candidates.

Next, at step S40, the generation section 16 applies the exclusion list to the k-item candidates extracted at step S38, and the remaining non-excluded k-item candidates are added to the set $C_k$. This results in $C_2 = \{(b, H), (G, H)\}$, due to (b, G), (b, J), (G, J), and (H, J) being excluded based on the exclusion list.

Next, at step S42, the generation section 16 extracts as k-items candidates for which the support number is the threshold value or greater from out of the k-item candidates contained in the set $C_k$, and adds these to the set $L_k$. In this case the 2-items (b, H) and (G, H) both have a support number of 3, and so $L_2 = (b, H), (G, H)\}$.

Next, at step S44, the generation section 16 determines whether or not any k-item was extracted at step S42. In cases in which there was a k-item extracted processing transitions to step S46 where the generation section 16 increments k by 1, and then processing returns to step S38. In cases in which there was no k-item extracted, the k-item extraction processing is ended, and processing returns to the association rule generation processing (Fig. 7). Processing returns to step S38 since 2-item extraction had been performed.

At step S38 for k = 3, the generation section 16 extracts the 3-item candidate (b, G, H) from a combination of items contained in $L_2$ = (b, H), (G, H). Next, at step S40, the generation section 16 applies the exclusion list to (b, G, H), and (b, G, H) is excluded due to the pair b and G being included as expressed by list (b) = (G, J) of the exclusion list. Thus there was no 3-item extraction performed, negative determination is made at step S44, the k-item extraction processing is ended, and processing returns to the association rule generation processing (Fig. 7).

Note that at step S42, the generation section 16 determines whether or not to include a (k-1)-item having a support number less than the threshold value obtained at step S42 the previous time, from out of the (k-1)-items of combinations of items included in the k-item candidates. In a case not including (k-1)-items having a support number less than the threshold value, the generation section 16 extracts the candidates for the k-item as the k-item and adds these to $L_k$. However, in a case including a (k-1)-item having a support number less than the threshold value, the generation section 16 does not extract this candidate for k-item as the k-item. This accordingly enables simplification of the determination as to whether or not the support number of the k-item is the threshold value or greater.

Next, at step S50 of the association rule generation processing (Fig. 7), the generation section 16 generates an association rule for each of the k-items extracted by the k-item extraction processing, namely for each of the k-items included in the $L_k$ (k ≥ 2). In the case described above, the k-items of $L_2$ = {(b, H), (G, H)} are extracted, and so the association rules [b → H], [H → b], [G → H], and [H → G] are generated. The generation section 16 computes the confidence level for each of the generated association rules, and outputs any association rules having a confidence level of the threshold value or greater. In a case in which the confidence level threshold value is 80%, then the finally output association rules are [b → H], and [H → G]. The association rule generation processing is ended when these association rules have been output.

As described above, the association rule generation device according to the present exemplary embodiment acquires plural transaction data containing one or more item. Moreover, for each of the transaction data, the association rule generation device augments the transaction data with high level concept items for each of the one or more items contained in the transaction data. The association rule generation device then employs combinatorial itemsets of two or more items contained in the plural transaction data augmented by the high level concept items to generate association rules indicating associations between items. This thereby enables association rules to be generated that have appropriately incorporated high level concepts.

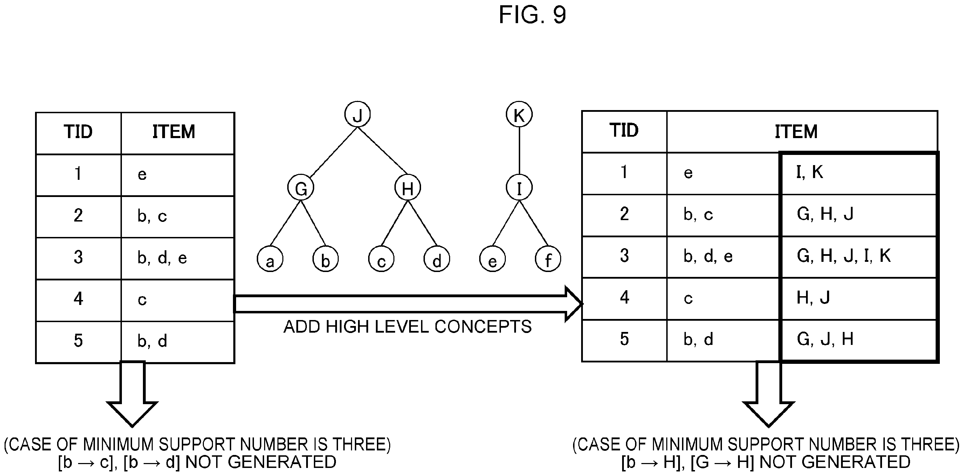

For example, consider a case in which itemsets having a minimum support number of three, namely having a support number of three or more, are extracted from the transaction data set prior to augmenting with high level concept items, as illustrated on the left in Fig. 9, and association rules generated therefor. In this case the association rules [b → c] and [b → d] are not generated. However, as illustrated on the right in Fig. 9, in a case in which the transaction data has been augmented by the high level concept items, association rules of [b → H] and [G → H] are generated as high level concepts of [b → c] and [b → d]. The present exemplary embodiment is accordingly able to generate association rules for high level concepts even in cases in which association rules are not generated for low level concepts.

Moreover, even in cases such as the technology of Non-Patent Document 2 in which association rules are generated from high level concept items, association rules such as [b → H], which is able to be generated in the present exemplary embodiment, are not able to be generated for cases in which association rules are generated only from items in a specified same hierarchical layer. The present exemplary embodiment enables association rules to be generated from itemsets belonging to different hierarchical layers.

Moreover, when extracting itemsets, the association rule generation device according to the present exemplary embodiment applies an exclusion list produced based on the hierarchical relationship of items, and exclude unwanted itemsets. This thereby suppresses the generation of association rules such as those expressing a known hierarchical relationship between items, and the generation of redundant association rules such as association rules for inclusion relationships and the like. Moreover, processing can be speeded up by application of the exclusion list when extracting itemsets, compared to cases in which filtering is performed after association rules have been generated. For example, when s is an average of the number of items of pairs with each item in the exclusion list, then when extracting 2-items processing can be performed at $s^2$ times the speed compared to not employing the exclusion list, and when extracting 3-items processing can be performed at $s^3$ times the speed compared thereto. Note that s tends to increase by more the deeper the hierarchical layers of the data (ontology) indicating the hierarchical relationships between items.

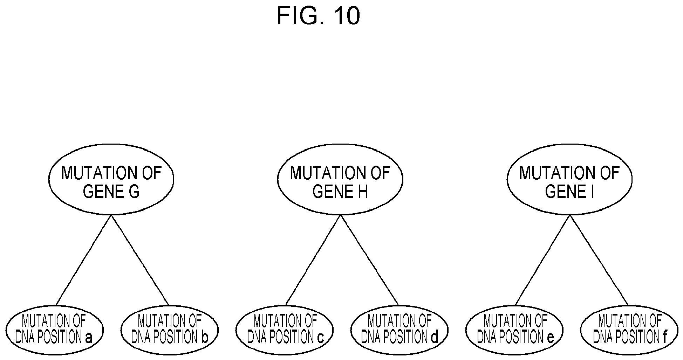

Explanation follows regarding advantageous effects of present exemplary embodiment using specific examples. For example, in transaction data in which expressed mutations have been associated with the presence or absence of medical efficacy of a drug, an ontology is acquired such as illustrated in Fig. 10. The example of Fig. 10 illustrates respective hierarchical relationships for mutation of DNA position a and mutation of DNA position b that are types of mutation of a gene G, for mutation of DNA position c and mutation of DNA position d that are types of mutation of a gene H, and for mutation of DNA position e and mutation of DNA position f that are types of mutation of a gene I. Association rules are generated for antecedents of combinatorial mutations and for consequents of presence or absence of medical efficacy. In such a case combinatorial mutations, i.e. antecedents, may be extracted using the method of item extraction of the exemplary embodiment described above.

Consider the following two phenomenon.

(1) mutation of DNA position a does not affect gene function, and the high level gene ceases to function in cases in which other mutations are expressed.
(2) there is a medical efficacy of a given drug in cases in which the gene G and the gene I cease functioning at the same time.

In such cases, association rules of [(mutation of DNA position b, mutation of DNA position e) → medical efficacy present], and [(mutation of DNA position b, mutation of DNA position f) → medical efficacy present] are respectively generated by a method in which the transaction data is not augmented with high level concept items. However, the association rule of [(mutation of DNA position b, mutation of DNA position of gene I) → medical efficacy present] is able to express the above phenomenon using fewer rules and is more easily understood. Namely, an association rule conceptualized by including a high level concept is a better logical reflection of the actual mechanism than an association rule conceptualized by low level concepts alone, and is an association rule with good predictability. Moreover, for association rules using high level concepts, there are also a greater number of applicable transaction data, resulting in association rules that more accurately represent a phenomenon. The method of the present exemplary embodiment is considered to be particularly useful in medical fields due to the type of mechanism described above occurring not infrequently in real life.

Moreover, the association rules generated in the present exemplary embodiment are particularly useful in cases in which the validity of data is being verified, and in cases in which an unknown relationship is discovered. For example, in relation to medical fields, an association rule generated by the method of the present exemplary embodiment is useful in cases in which the validity of collected data is being checked by comparison against the knowledge of a doctor or the like. Moreover, the method of the present exemplary embodiment is also useful in cases in which a surprising association rule is discovered, and the content indicating this association rule is confirmed by tests and the like, leading to pure medical discoveries. Moreover, the method of the present exemplary embodiment is also useful in cases developing an understanding of the mechanism of medical efficacy of a drug based on the association rules generated.

Note that although in the present exemplary embodiment explanation has been given of a case in which the transaction data in table format and the ontology are respectively input and acquired, there is no limitation thereto. For example, items contained in the transaction data may be acquired as data expressed by a knowledge graph combining these items and items having a hierarchical relationship thereto. In such cases the acquired knowledge graph may be transformed into an augmented transaction data set in table format, as illustrated in Fig. 4.

Moreover, although in the present exemplary embodiment the association rule generation program is described as being in a format pre-stored (installed) in a storage section, there is no limitation thereto. The program according to the technology disclosed herein may be provided in a format stored on a storage medium such as a CD-ROM, DVD-ROM, USB memory, or the like.

The technology disclosed herein enables association rules to be generated that appropriately incorporate high level concepts.

All publications, patent applications and technical standards mentioned in the present specification are incorporated by reference in the present specification to the same extent as if each individual publication, patent application, or technical standard was specifically and individually indicated to be incorporated by reference.

**Claims**

1. An association rule generation program (50) executable by a computer (40) to perform processing, the processing comprising:

   acquiring a plurality of items of combinatorial data including one or more data values (52);
   for each of the items of combinatorial data, augmenting the combinatorial data with a high level concept data value for each of the one or more data values contained in the combinatorial data (54); and
   generating an association rule indicating an association between data values by employing the plurality of items of combinatorial data augmented with the high level concept data values (56).

2. The association rule generation program of claim 1, wherein the association rule is generated from a data value set satisfying a prescribed condition among data value sets containing two or more of the data values contained in the plurality of items of combinatorial data augmented by the high level concept data values.

3. The association rule generation program of claim 2, wherein the prescribed condition is that data value combinations corresponding to a high level concept/low level concept relationship are not included in the data value set.

4. The association rule generation program of claim 2 or claim 3, wherein a data value set satisfying the prescribed condition is extracted using an *a priori* algorithm, and an association rule is generated that is expressed with an antecedent expressed by a combination of one or more data values contained in the extracted data value set and a consequent expressed by a combination of remaining data values.

5. The association rule generation program of any one of claim 2 to claim 4, wherein the prescribed condition is that an index related to appearance frequency of the data value set in the plurality of items of combinatorial data exceeds a threshold value.

6. The association rule generation program of any one of claim 1 to claim 5, wherein:

   data expressed in a table format of data values contained in each of the items of combinatorial data is acquired as the plurality of items of combinatorial data; and
   data values that are high level concepts of the data values are added to the items of combinatorial data with reference to pre-prepared high level concept/low level concept relationships related to the data values.

7. The association rule generation program of any one of claim 1 to claim 5, wherein:

   a knowledge graph acquired as the plurality of items of combinatorial data includes data values contained in each item of combinatorial data and respective data values indicating a high level concept/low level concept relationship to the data values expressed as nodes, and includes relationships between the data values expressed by edges connecting between the nodes; and
   the plurality of items of combinatorial data augmented with high level concept data values for the data values is acquired by transforming the knowledge graph into data expressed in a table format of data values contained in each of the items of combinatorial data and the high level concept data values for the data values.

8. An association rule generation device (10), comprising:

   an acquisition section (12) configured to acquire a plurality of items of combinatorial data including one or more data values;
   an augmentation section (14) configured, for each of the items of combinatorial data, to augment the combinatorial data with a high level concept data value for each of the one or more data values contained in the combinatorial data; and
   a generation section (16) configured to generate an association rule indicating an association between data values by employing the plurality of items of combinatorial data augmented with the high level concept data values.

9. The association rule generation device of claim 8, wherein the generation section generates the association rule from a data value set satisfying a prescribed condition among data value sets containing two or more of the data values contained in the plurality of items of combinatorial data augmented by the high level concept data values.

10. The association rule generation device of claim 9, wherein the prescribed condition is that data value combinations corresponding to a high level concept/low level concept relationship are not included in the data value set.

11. The association rule generation device of claim 9 of claim 10, wherein the generation section extracts a data value set satisfying the prescribed condition using an *a priori* algorithm, and generates an association rule expressed with an antecedent expressed by a combination of one or more data values contained in the extracted data value set and a consequent expressed by a combination of remaining data values.

12. The association rule generation device of any one of claim 9 to claim 11, wherein the prescribed condition is that an index related to appearance frequency of the data value set in the plurality of items of combinatorial data exceeds a threshold value.

13. The association rule generation device of any one of claim 8 to claim 12, wherein:

   the acquisition section acquires data expressed in a table format of data values contained in each of the items of combinatorial data as the plurality of items of combinatorial data; and
   the augmentation section adds data values that are high level concepts of the data values to the items of combinatorial data with reference to pre-prepared high level concept/low level concept relationships related to the data values.

14. The association rule generation device of any one of claim 8 to claim 12, wherein:

the acquisition section acquires, as the plurality of items of combinatorial data, a knowledge graph including data values contained in each item of combinatorial data and respective data values indicating a high level concept/low level concept relationship to the data values expressed as nodes, and including relationships between the data values expressed by edges connecting between the nodes; and
the augmentation section acquires the plurality of items of combinatorial data augmented with high level concept data values for the data values by transforming the knowledge graph into data expressed in a table format of data values contained in each of the items of combinatorial data and the high level concept data values for the data values.

15. An association rule generation method, comprising:

acquiring a plurality of items of combinatorial data including one or more data values;
for each of the items of combinatorial data, augmenting the combinatorial data with a high level concept data value for each of the one or more data values contained in the combinatorial data; and
generating an association rule indicating an association between data values by employing the plurality of items of combinatorial data augmented with the high level concept data values.

# FIG. 1

TRANSACTION DATA SET
AND ONTOLOGY

10

12
ACQUISITION SECTION

14
AUGMENTATION SECTION

16
GENERATION SECTION

ASSOCIATION RULE

# FIG. 2

| TID | ITEM |
|-----|---------|
| 1 | e |
| 2 | b, c |
| 3 | b, d, e |
| 4 | c |
| 5 | b, d |

# FIG. 3

# FIG. 4

| TID | ITEM | |
|---|---|---|
| 1 | e | I, K |
| 2 | b, c | G, H, J |
| 3 | b, d, e | G, H, J, I, K |
| 4 | c | H, J |
| 5 | b, d | G, H, J |

| TID | a | b | c | d | e | f | G | H | I | J | K |
|---|---|---|---|---|---|---|---|---|---|---|---|
| 1 | 0 | 0 | 0 | 0 | 1 | 0 | 0 | 0 | 1 | 0 | 1 |
| 2 | 0 | 1 | 1 | 0 | 0 | 0 | 1 | 1 | 0 | 1 | 0 |
| 3 | 0 | 1 | 0 | 1 | 1 | 0 | 1 | 1 | 1 | 1 | 1 |
| 4 | 0 | 0 | 1 | 0 | 0 | 0 | 0 | 1 | 0 | 1 | 0 |
| 5 | 0 | 1 | 0 | 1 | 0 | 0 | 1 | 1 | 0 | 1 | 0 |

FIG. 5

EXCLUSION LIST

list(a)=(G,J)
list(b)=(G,J)
list(c)=(H,J)
list(d)=(H,J)
list(e)=(I,K)
list(f)=(I,K)
list(G)=(J)
list(H)=(J)
list(I)=(K)
list(J)=()
list(K)=()

# FIG. 6

# FIG. 7

```
START
```

ACQUIRE TRANSACTION DATA SET
AND ONTOLOGY — S10

ADD HIGH LEVEL CONCEPT ITEM
FOR EACH ITEM TO TRANSACTION
DATA SET — S20

k-ITEM EXTRACTION
PROCESSING — S30

GENERATE ASSOCIATION RULE,
COMPUTE CONFIDENCE LEVEL,
AND OUTPUT ASSOCIATION RULES
WITH CONFIDENCE LEVEL OF
THRESHOLD VALUE OR GREATER — S50

```
END
```

## FIG. 8

k-ITEM EXTRACTION
PROCESSING

EXTRACT ITEMS HAVING SUPPORT NUMBER
OF THRESHOLD VALUE OR GREATER FROM
ITEMS CONTAINED IN AUGMENTED
TRANSACTION DATA SET, ADD ITEMS TO $L_1$ — S32

GENERATE EXCLUSION LIST
FROM ONTOLOGY — S34

k = 2 — S36

EXTRACT k-ITEM CANDIDATES
FROM $L_{k-1}$ — S38

S46

k ← k + 1

APPLY EXCLUSION LIST TO k-ITEM
CANDIDATES, ADD REMAINING TO $C_k$ — S40

EXTRACT FROM $C_k$ ANY k-ITEMS HAVING
SUPPORT NUMBER OF THRESHOLD VALUE
OR GREATER, ADD TO $L_k$ — S42

Y    WAS k-ITEM    S44
EXTRACTED?

N

RETURN

# FIG. 9

EP 4 102 415 A1

FIG. 10

EP 4 102 415 A1

Europäisches
Patentamt
European
Patent Office
Office européen
des brevets

# EUROPEAN SEARCH REPORT

Application Number

EP 22 17 1569

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BYTYÇI ELIOT ET AL: "Enrichment of Association Rules through Exploitation of Ontology Properties – Healthcare Case Study", PROCEDIA COMPUTER SCIENCE, ELSEVIER, AMSTERDAM, NL, vol. 113, 19 September 2017 (2017-09-19), pages 360–367, XP085177150, ISSN: 1877-0509, DOI: 10.1016/J.PROCS.2017.08.345 * the whole document * | 1-15 | INV. G06N5/02 |
| A | Claudia d'Amato et al: "Semantic Knowledge Discovery and Data-Driven Logical Reasoning from HeterogeneousData Sources", 30 November 2014 (2014-11-30), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, XP047296924, ISBN: 978-3-540-74549-5 * the whole document * | 1-15 | |
| A | BARATI MOLOOD ET AL: "Mining semantic association rules from RDF data", KNOWLEDGE-BASED SYSTEMS, ELSEVIER, AMSTERDAM, NL, vol. 133, 10 July 2017 (2017-07-10), pages 183-196, XP085175398, ISSN: 0950-7051, DOI: 10.1016/J.KNOSYS.2017.07.009 * the whole document * | 1-15 | TECHNICAL FIELDS SEARCHED (IPC) G06N |

The present search report has been drawn up for all claims

| Place of search | Date of completion of the search | Examiner |
|---|---|---|
| The Hague | 13 October 2022 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 102 415 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANDREA BELLANDI ; BARBARA FURLETTI ; VALERIO GROSSI ; ANDREA ROMEI.** Ontology-Driven Association Rule Extraction: A Case Study. *Conference: Proceedings of the International Workshop on Contexts and Ontologies: Representation and Reasoning (C&O:RR) Collocated with the 6th International and Interdisciplinary Conference on Modelling and Using Context (CONTEXT-2007), Roskilde, Denmark,* 21 August 2007